# EUROPÄISCHE PATENTSCHRIFT

(11) **EP 1 075 997 B1**
(45) Veröffentlichungstag und Bekanntmachung des Hinweises auf die Patenterteilung: **17.04.2002**
(21) Anmeldenummer: 00113355.2
(22) Anmeldetag: 23.06.2000
(51) Int. Cl.: B62D 1/18

(54) **Verstellmechanismus für eine Lenksäule eines Kraftfahrzeugs**
Mechanism for adjusting a motor vehicle steering column
Mécanisme de réglage pour colonne de direction de véhicule à moteur

(30) Priorität: 17.07.1999 DE 19933674
(43) Veröffentlichungstag der Anmeldung: 14.02.2001
(73) Patentinhaber: DaimlerChrysler AG, 70567 Stuttgart (DE)
(72) Erfinder: Orbach, Gregor, 71088 Holzgerlingen (DE)

(56) Entgegenhaltungen:
- EP-A- 0 802 104
- DE-C- 19 638 051

## Beschreibung

Die Erfindung betrifft einen Verstellmechanismus für eine Lenksäule einer Lenkungsanlage eines Kraftfahrzeugs, der auf jeder Seite wenigstens zwei sich kreuzende Lamellenpakete aufweist, die durch eine quer zu einem Mantelrohr der Lenksäule verlaufendes Spanngliedanordnung gegeneinander preßbar oder voneinander lösbar sind, wobei die Lamellenpakete mit endseitigen Aufnahmen auf Haltebolzen relativ zu einem fahrzeugfesten Teil und relativ zu dem Mantelrohr festgelegt sind.

Ein solcher Verstellmechanismus ist aus der EP 0 802 104 A1 bekannt. Die bekannte Kraftfahrzeug-Lenksäule weist ein Mantelrohr auf, das mittels eines Verstellmechanismus an einer fahrzeugfesten Konsole gehalten ist. Der Verstellmechanismus ist mit mehreren Lamellenpaketen versehen, die jeweils mehrere, zueinander beabstandete Lamellen aufweisen. Die Lamellen eines Lamellenpaketes sind jeweils mit einem Längsschlitz bzw. mit einem Hochschlitz versehen, je nachdem, welche Verstellbewegung des Mantelrohres, d.h. eine Längs- oder Höhenverstellung, sie zulassen sollen. Die Lamellen der für die Verstellung in Hochrichtung bzw. die Verstellung in Längsrichtung vorgesehenen Lamellenpakete durchsetzen sich kreuzend sandwichartig. Die Langlöcher in Form der Längsschlitze der Lamellenpakete werden von einem Spannbolzen in Fahrzeugquerrichtung und damit quer zum Mantelrohr durchsetzt, der Teil eines Spanngliedes ist. Das Spannglied ermöglicht eine Verspannung der Lamellen gegeneinander oder eine Freigabe der Lamellen, so daß entweder eine Festsetzung des Mantelrohres oder eine Freigabe des Mantelrohres für eine entsprechende Verstellbewegung eingestellt werden kann. Die Lamellen jedes Lamellenpaketes sind endseitig auf Haltebolzen aufgezogen, wobei sie entsprechende Aufnahmen zum Aufschieben auf die Haltebolzen aufweisen. Je nach der Toleranz der Aufnahmen ist es möglich, daß die Lamellen mit geringem Spiel auf dem jeweiligen Haltebolzen sitzen. Dies kann zu Geräuschen im Fahrbetrieb oder bei Verstellbewegungen des Mantelrohres führen.

Aufgabe der Erfindung ist es, einen Verstellmechanismus der eingangs genannten Art zu schaffen, der mit einfachen Mitteln eine weitgehend geräuschlose Funktion gewährleistet.

Diese Aufgabe wird dadurch gelöst, daß die Haltebolzen zur Positionierung der Lamellenpakete durch Nietanordnungen gebildet sind, die die Lamellenpakete endseitig jeweils formschlüssig sichern. Die Nietanordnungen gewährleisten eine spielfreie Positionierung der Lamellenpakete insgesamt wie auch der einzelnen Lamellen jedes Lamellenpaketes an dem Mantelrohr bzw. an dem fahrzeugfesten Teil, so daß Geräusche, die aus einem entsprechenden Spiel im Bereich der Aufnahmen der Lamellen resultierten, zuverlässig vermieden werden. Die Lamellenpakete können auch aus lediglich jeweils zwei Lamellen, vorzugsweise in Form von Federstahlblechen, aufgebaut sein. Die formschlüssige Sicherung in Längsrichtung der Haltebolzen und damit der Nietanordnungen verhindert zudem ein unbeabsichtigtes Lösen von dem Mantelrohr bzw. von dem fahrzeugfesten Teil. Darüberhinaus gewährleistet jede Nietanordnung zum einen eine spielfreie Halterung radial zur Längsrichtung jeder Nietanordnung und damit in der Ebene jeder Aufnahme der Lamellen der Lamellenpakete. Außerdem wird auch in Längsrichtung der Nietanordnungen und damit quer zu den Lamellen der Lamellenpakete ein formschlüssiger Rückhalt geschaffen, der auch in dieser Richtung eine Spielfreiheit gewährleistet. Das Vorsehen von grundsätzlich bekannten Nietanordnungen gewährleistet zudem die Montage und Festlegung der Lamellen jedes Lamellenpaketes an dem fahrzeugfesten Teil bzw. an dem Mantelrohr von einer einzelnen Montageseite aus. Dadurch wird die Montage des Verstellmechanismus erleichtert.

In Ausgestaltung der Erfindung sind die Nietanordnungen derart gespannt, daß Nietschäfte der Nietanordnungen sich spielfrei in die endseitigen Durchtritte der Lamellen einpassen. Die hülsenartigen Nietschäfte der Nietanordnungen verformen sich derart, daß sie die endseitigen Aufnahmen der Lamellenpakete vollständig ausfüllen.

In weiterer Ausgestaltung der Erfindung ist zwischen den Lamellen eines Lamellenpaketes wenigstens eine koaxial die Nietanordnung übergreifende Abstandshülse vorgesehen. Eine solche Abstandshülse kann mehrere Lamellen ersetzen und zudem im Lamellenpaket eine Lücke schaffen, die Raum für die Anordnung anderer Bauteile schafft.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung ein Mantelrohr einer Lenksäule eines Kraftfahrzeugs, das mittels einer Ausführungsform eines erfindungsgemäßen Verstellmechanismus an einer fahrzeugfesten Konsole positioniert ist,
- Fig. 2: eine weitere perspektivische Darstellung des Mantelrohres nach Fig. 1 von der gegenüberliegenden Seite her,
- Fig. 3: einen Ausschnitt des Verstellmechanismus für das Mantelrohr nach den Fig. 1 und 2 längs der Schnittebene III-III in Fig. 1,
- Fig. 4: in vergrößerter, schematischer Schnittdarstellung einen Montagevorgang zur Festlegung eines Lamellenpaketes des Verstellmechanismus an einem stationären Bauteil, und
- Fig. 5: die Schnittdarstellung nach Fig. 4, jedoch in fertig montiertem Zustand der Lamellenpakete und der Nietanordnung.

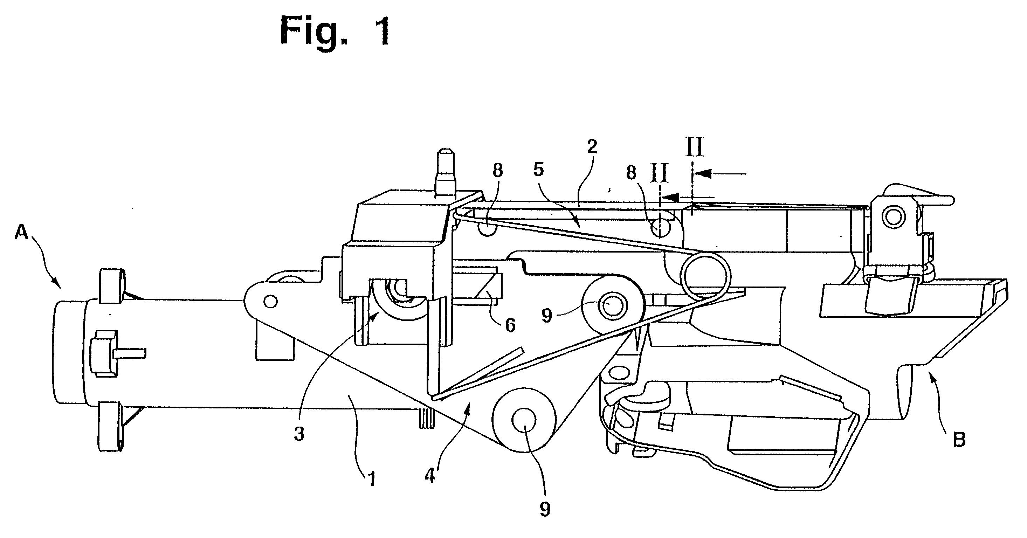

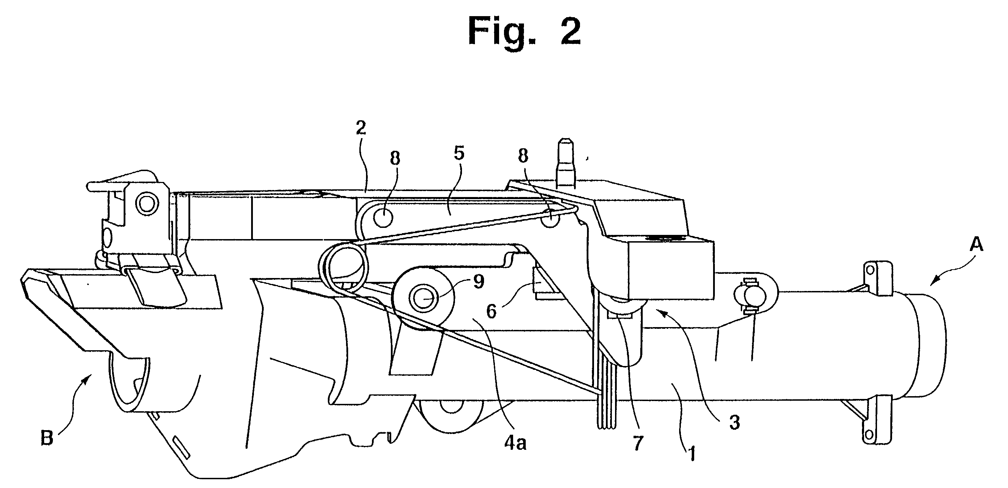

Eine Lenksäule für einen Personenkraftwagen weist gemäß den Fig. 1 und 2 ein Mantelrohr 1 auf, in dem in nicht näher dargestellter Weise eine Lenkspindel drehbar gelagert ist. Das Mantelrohr 1 ist mittels eines Verstellmechanismus 3 an einer fahrzeugfesten Konsole 2 verstellbar gehalten. Dabei weist die fahrzeugfeste Konsole 2 an einem - in Fahrtrichtung gesehen - vorderen Endbereich B des Mantelrohres 1 eine nicht näher bezeichnete, reiterförmige Aufhängung auf, an der das Mantelrohr 1 gehalten ist. Eine zum gegenüberliegenden, lenkradseitigen Endbereich A des Mantelrohres 1 hin versetzte hintere Aufhängung wird durch den nachfolgend näher beschriebenen Verstellmechanismus 3 gebildet.

Der Verstellmechanismus 3 weist auf gegenüberliegenden Seiten des Mantelrohres 1 jeweils ein Lamellenpaket 4 auf, das mantelrohrseitig festgelegt ist. Außerdem ist jedem mantelrohrseitigen Lamellenpaket 4 ein konsolenseitiges Lamellenpaket 5 zugeordnet, das jeweils an der fahrzeugfesten Konsole 2 festgelegt ist. Die einzelnen Lamellen der Lamellenpakete 4, 4a, 5 auf jeder Seite des Mantelrohres 1 kreuzen sich alternierend und sandwichartig, wobei die konsolenseitigen Lamellenpakete 5 mit - relativ zur Konsole gesehen - in Hochrichtung verlaufenden Langlochaussparungen 7 versehen sind. Die mantelrohrseitigen Lamellenpakete 4, 4a weisen etwa in Mantelrohrlängsrichtung verlaufende Langlochaussparungen 5 auf, die die Langlochaussparungen 7 der Lamellenpakete 5 kreuzen. Die Lamellenpakete 4, 4a, 5 sind aus einer geringen Anzahl einzelner Lamellen, vorzugsweise aus zwei Lamellen, zusammengesetzt. Im sich kreuzenden Bereich der Langlochaussparungen 6, 7 sind diese von einem Spannbolzen durchsetzt, der Teil einer Spanngliedanordnung des Verstellmechanismus 3 ist. Der Spannbolzen einer Spanngliedanordnung verläuft quer zur Spindelachse der Lenkspindel des Mantelrohres 1 und damit etwa in Fahrzeugquerrichtung.

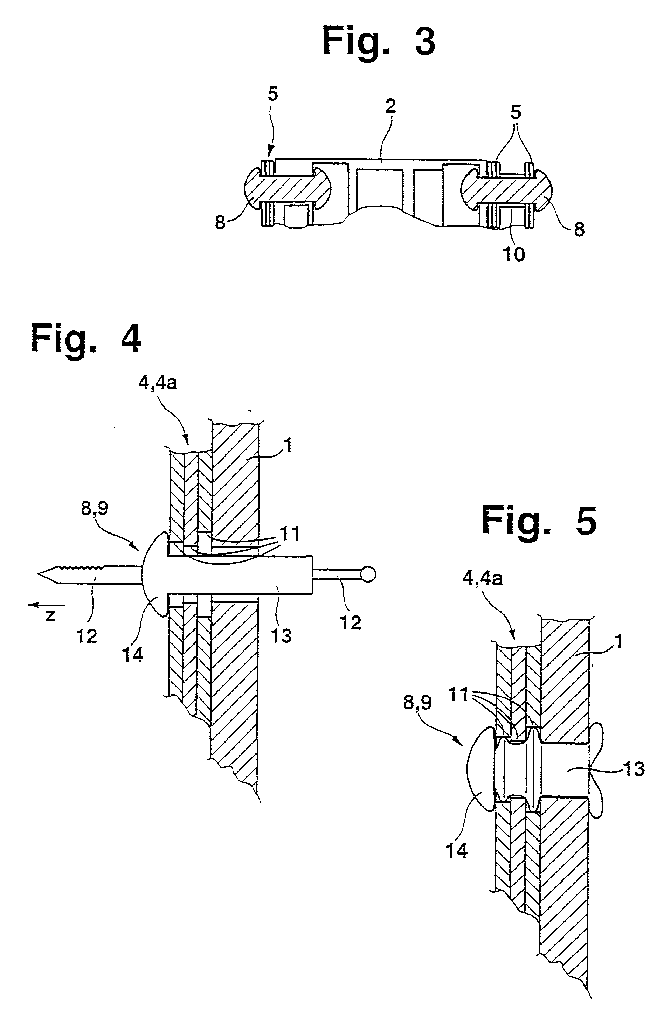

In Eck- oder Randabschnitten und damit endseitig sind alle Lamellen der Lamellenpakete 4, 4a, 5 jeweils mit wenigstens einer Aufnahme in Form einer kreisförmigen Aussparung versehen, die zur Festlegung der jeweiligen Lamelle mittels eines Haltebolzens in Form einer Nietanordnung 8, 9 an dem jeweiligen Bauteil, d.h. an der Konsole 2 oder an dem Mantelrohr 1, dient. Die Nietanordnungen 8, 9 sind derart gestaltet, daß sie die einzelnen Lamellen der Lamellenpakete 4, 4a, 5 im Bereich der jeweiligen Haltepunkte spielfrei sowohl längs der Befestigungsachse als auch radial und damit quer zur Befestigungsachse jeder Nietanordnung 8, 9 sichern. Ein wesentlicher Vorteil der Nietanordnungen 8, 9 ist es, daß die Montage der Nietanordnungen 8 von einer Seite her und damit beim vorliegenden Ausführungsbeispiel vorzugsweise jeweils von der Außenseite her erfolgen kann, ohne daß ein Gegenhalten auf der jeweiligen Innenseite während der Montage durch ein Werkzeug oder einen entsprechenden Handgriff geschaffen werden muß. Die längs der Befestigungsachse erfolgende Spielfreiheit erfolgt durch eine entsprechende Verspannung der Nietanordnung 8, 9 in Zugrichtung Z (Fig. 4), wobei ein Nietkopf 14 einerseits und ein deformiertes Stirnende eines Nietschaftes 13 der Nietanordnung 8, 9 andererseits die entsprechend formschlüssig wirksamen Endanschläge bilden. Wie anhand der Fig. 4 und 5 erkennbar ist, wird der Nietschaft 13 darüber hinaus bei seiner Stauchung aufgrund der Zugbelastung in Pfeilrichtung Z des Zugstabes 12 derart aufgeweitet, daß er die zur Verfügung stehenden Aussparungen der Aufnahmen 11 der Lamellen der Lamellenpakete 4, 4a bzw. 5 und des Mantelrohres 1 bzw. der fahrzeugfesten Konsole 2 gemäß Fig. 5 vollkommen ausfüllt. Dadurch wird die gewünschte Spielfreiheit quer zur Befestigungsachse der jeweiligen Nietanordnung 8, 9 geschaffen, so daß die Lamellen der Lamellenpakete 4, 4a, 5 in blockierter Position neben der kraftschlüssigen Preßung auch durch entsprechend spielfreien Formschluß im Bereich der Haltepunkte gehalten sind.

In grundsätzlich bekannter Weise sind die Lamellen der Lamellenpakete 4, 4a, 5 zwischen den Haltepunkten und insbesondere im Bereich des Durchtrittes des Spannbolzens derart nachgiebig gestaltet, daß bei einer Spannung bzw. einem Lösen der Spanngliedanordnung eine sichere Preßung bzw. eine Freigabe für eine Verschiebung gegeben ist.

Wie anhand der Fig. 3 erkennbar ist, ist es möglich, ein Lamellenpaket 5 auch aus einer Kombination von Lamellen mit einer Abstandshülse 10 aufzubauen, die sich zwischen zwei Teilpaketen von Lamellen des Lamellenpaketes 5 erstreckt, und die koaxial zu der Nietanordnung 8 positioniert ist. Auch diese Abstandshülse 10 wird spielfrei auf dem Nietschaft der Nietanordnung 8 gehalten, sobald die Nietanordnung 8 in ihre Funktionsposition verspannt ist.

## Patentansprüche

1. Verstellmechanismus für eine Lenksäule einer Lenkungsanlage eines Kraftfahrzeugs, der auf jeder Seite wenigstens zwei sich kreuzende Lamellenpakete aufweist, die durch ein quer zu einem Mantelrohr der Lenksäule verlaufende Spanngliedanordnung gegeneinander preßbar oder voneinander lösbar sind, wobei die Lamellenpakete mit endseitigen Aufnahmen auf Haltebolzen relativ zu einem fahrzeugfesten Teil oder relativ zu dem Mantelrohr festgelegt sind,
**dadurch gekennzeichnet,**
**daß** die Haltebolzen zur Positionierung der Lamellenpakete (4, 4a, 5) durch Nietanordnungen (8, 9) gebildet sind, die die Lamellenpakete (4, 4a, 5) endseitig jeweils formschlüssig sichern.

2. Verstellmechanismus nach Anspruch 1,
**dadurch gekennzeichnet,**
**daß** die Nietanordnungen (8, 9) derart gespannt sind, daß Nietschäfte (13) der Nietanordnungen (8, 9) sich spielfrei in die endseitigen Aufnahmen (11) der Lamellenpakete (4, 4a, 5) einpassen.

3. Verstellmechanismus nach Anspruch 1 oder 2,
**dadurch gekennzeichnet,**
**daß** zwischen Lamellen eines Lamellenpaketes (5) wenigstens eine koaxial die Nietanordnung (8) übergreifende Abstandshülse (10) vorgesehen ist.

## Claims

1. Adjusting mechanism for a steering column of a steering system of a motor vehicle, having at least two mutually overlapping plate stacks which may be applied against one another or moved apart from one another by means of a clamping member system extending transversely to a tubular casing of the steering column, the plate stacks being fixed relative to a vehicle-mounted part and relative to the tubular casing on retaining bolts at end-side retaining points,
**characterised in that**
the retaining bolts for positioning the plate stacks (4, 4a, 5) are provided in the form of rivet assemblies (8, 9) which secure the respective plate stacks (4, 4a, 5) in an end-side positive-fit mounting.

2. Adjusting mechanism as claimed in claim 1,
**characterised in that**
the rivet assemblies (8, 9) are clamped so that rivet shafts (13) of the rivet assemblies (8, 9) fit in the end-side retaining points (11) of the plate stacks (4, 4a, 5) without any clearance.

3. Adjusting mechanism as claimed in claim 1 or 2,
**characterised in that**
at least one spacer sleeve (10) coaxially engaging around the rivet assembly (8) is provided between plates of a plate stack (5).

## Revendications

1. Mécanisme de réglage pour une colonne de direction d'un système de direction d'un véhicule automobile, lequel mécanisme de réglage comprend, de chaque côté, au moins deux paquets de lames se croisant qui peuvent être pressés l'un contre l'autre ou détachés l'un de l'autre au moyen d'un ensemble d'éléments de serrage s'étendant transversalement par rapport à un tube de protection, où les paquets de lames, comportant des logements d'extrémités, sont fixés sur des boulons de fixation par rapport à une pièce fixe du véhicule ou par rapport au tube de protection,
**caractérisé en ce que** les boulons de fixation servant au positionnement des paquets de lames (4, 4a, 5) sont formés par des éléments rivetés (8, 9) qui fixent à chaque fois par sûreté de forme, côté extrémité, les paquets de lames (4, 4a, 5).

2. Mécanisme de réglage selon la revendication 1, **caractérisé en ce que** les ensembles rivetés (8, 9) sont serrés de façon telle, que les tiges de rivets (13) des éléments rivetés (8, 9) s'adaptent sans jeu dans les logements d'extrémités (11) des paquets de lames (4, 4a, 5).

3. Mécanisme de réglage selon la revendication 1 ou 2, **caractérisé en ce qu'**il est prévu, entre des lames d'un paquet de lames (5), au moins une douille d'écartement (10) chevauchant l'élément riveté (8) de façon coaxiale.
